# EUROPÄISCHE PATENTANMELDUNG

(11) **EP 0 733 795 A2**
(43) Veröffentlichungstag der Anmeldung: **25.09.1996**
(21) Anmeldenummer: 95120482.5
(22) Anmeldetag: 22.12.1995
(51) Int. Cl.: F02M 37/00

(54) **Brennstoffversorgungssystem für Brennkraftmaschinen**

(30) Priorität: 23.03.1995 DE 19510497
(71) Anmelder: Pierburg Aktiengesellschaft, 41460 Neuss (DE)
(72) Erfinder: Radermacher, Bernhard, D-41748 Viersen (DE); Garcke, Henning, D-47877 Willich (DE); Beier, Heinz, D-40667 Meerbusch (DE)

(57) **Zusammenfassung**

2.1
Bei einem derartigen System liegen Druckschwankungen und eine hohe Leistungsaufnahme der Brennstoffpumpe vor.

2.2
Hiergegen weist das neue System die Merkmale auf, daß stromab des Druckreglers (4) zusätzlich ein Reduzierregler (5) eingesetzt ist, dessen Reduzierdruck niedriger als der vom Druckregler (4) geregelte Druck ist.

2.3
Das neue Brennstoffversorgungssystem eignet sich für Brennkraftmaschinen, die in Fahrzeuge eingebaut werden.

## Beschreibung

Die Erfindung betrifft ein Brennstoffversorgungssystem für Brennkraftmaschienen nach dem Oberbegriff des Patentanspruchs 1.

Derartige Systeme bestehen aus einer Brennstoffpumpe und einem Druckregler, wobei der Druckregler stromab einer Verteilerleiste angeordnet ist und Überschußbrennstoff in den Brennstofftank abfließen läßt. Hierbei arbeitet die Brennstoffpumpe mit großer Fördermenge gegen den geregelten Brennstoffdruck. Bei längerem Leerlauf- und Teillastbetrieb der Brennkraftmaschine wird durch die Motorabwärme erhitzter Brennstoff in großen Mengen in den Tank zurückgefördert, wodurch erhöhter Dampfdruck und Gasblasen im von der Pumpe angesaugten Brennstoff entstehen können.

Aus der DE-A1-43 32 446 ist eine Versorgungseinrichtung bekannt, bei der ein zwischen Brennstoffpumpe und Verteilerleiste eingesetzter Druckschalter in Abhängigkeit des Pumpenauslaßdrucks zwischen leitend und nichtleitend schaltet und dadurch die Brennstoffpumpe über eine Regelschaltung mit unterschiedlicher elektrischer Leistung versorgt wird, wenn der Pumpenauslaßdruck einen Schwellwert des Druckschalters über- oder unterschreitet.

Bei dieser Einrichtung ist offensichtlich kein Brennstoffrücklauf in den Tank vorgesehen, es ist jedoch mit einer größeren Schwankung des Pumpenauslaßdrucks wegen der erforderlichen Schalthysterese zu rechnen.

Aus der DE-A1-31 02 983 ist eine Vorrichtung zur Steuerung der Brennstoffzufuhr bekannt, bei der ein Druckregler einen Schalter/Widerstand verstellt, dessen Widerstand von der zurückströmenden Brennstoffmenge abhängig die Leistungszufuhr der Brennstoffpumpe steuert. Auch bei dieser Vorrichtung tritt eine Erhöhung der Brennstofftemperatur im Tank ein und liegt eine größere Pumpendruckschwankung durch die Schalthysterese vor.

Hiervon ausgehend liegt der Erfindung die Aufgabe zugrunde, ein gattungsgemäßes Brennstoffversorgungssystem derart zu gestalten, daß eine verringerte Druckschwankung an der Verteilerleiste vorliegt, keine durch Motorabwärme bewirkte Brennstofftemperaturerhöhung eintritt und darüber hinaus ein Pumpenbetrieb mit insgesamt verringerter Leistungszufuhr erreichbar wird.

Diese Aufgabe ist bei dem System nach dem Oberbegriff des Patentanspruchs 1 durch die im Kennzeichen des Anspruchs angegebenen Merkmale gelöst. Vorteilhafte Weiterbildungen der Erfindung sind mit den Merkmalen der Unteransprüche angegeben.

Ein Ausführunsbeispiel der Erfindung ist in der Zeichnung dargestellt und wird nachfolgend beschrieben.

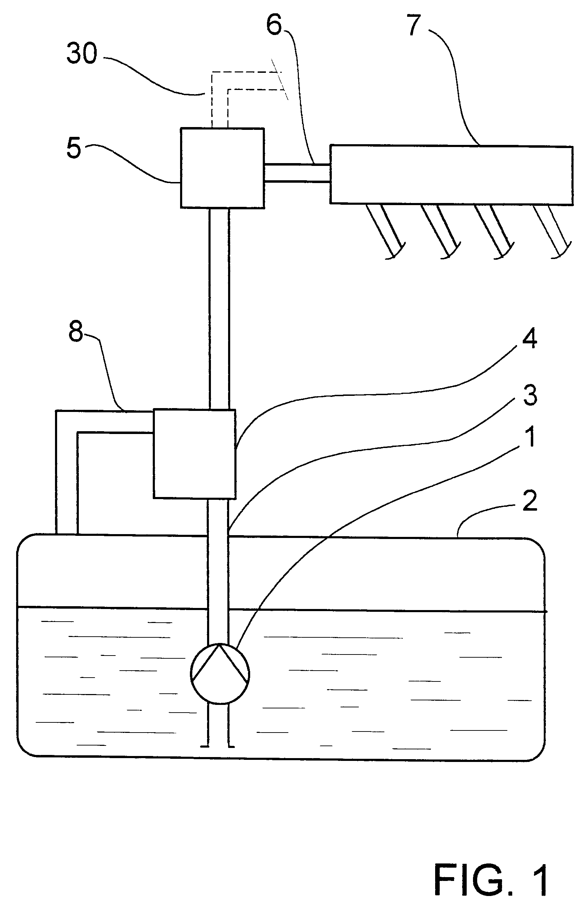

Diese zeigt:
Fig. 1
   ein erfindungsgemäßes Brennstoffversorgungssystem,
Fig. 2
   einen Druckregler aus Fig. 1,
Fig. 3 und 4
   alternative Ausbildungen des Druckreglers.

Fig. 1 zeigt schematisch ein erfindungsgemäßes Brennstoffversorgungssystem für Brennkraftmaschinen, gebildet aus einer Brennstoffpumpe 1, die an einen Brennstofftank 2 angeschlossen ist und über eine Brennstoffdruckleitung 3 zu der Brennkraftmaschine fördert. Im Zuge der Druckleitung 3 ist ein Druckregler 4 und nachfolgend ein Reduzierdruckregler 5 angeordnet, dessen Ausgangsleitung 6 mit einer Verteilerleiste 7 der Brennkraftmaschine verbunden ist.

Vom Druckregler 4 führt eine Rückführleitung 8 in den Tank 2 zurück, über die von der Brennkraftmaschine nicht benötigter Brennstoff zurückfließt. Der Reduzierdruckregler 5 ist so eingestellt, daß der Reduzierdruck geringer als der vom Druckregler 4 geregelte Druck ist.

Mit Einsatz des Reduzierdruckreglers 5 ist sichergestellt, daß die vom Druckregler 4 ausgehenden Druckschwankungen in der Brennstoffdruckleitung 3 nicht in die Verteilerleiste 7 durchschlagen.

Der Druckregler 4 weist ein großes Speichervolumen auf, das einen großen Verstellweg für ein Druckregelventil 9 des Druckreglers 4 ergibt. Es ist vorgesehen, daß das Druckregelventil 9 bei großem gespeicherten Brennstoffvolumen einen großen Rückfluß in den Tank einstellt und bei einem kleinen Brennstoffvolumen einen kleinen/keinen Rückfluß.

Insbesondere bei Ausführung des Druckregelventils 9 als Auf-Zu-Ventil ist vorgesehen, daß der Druckregler 4 mit einer großen Schalthysterese arbeitet und bei großem Brennstoffvolumen das Druckregelventil öffnet und bei keinem verschließt.

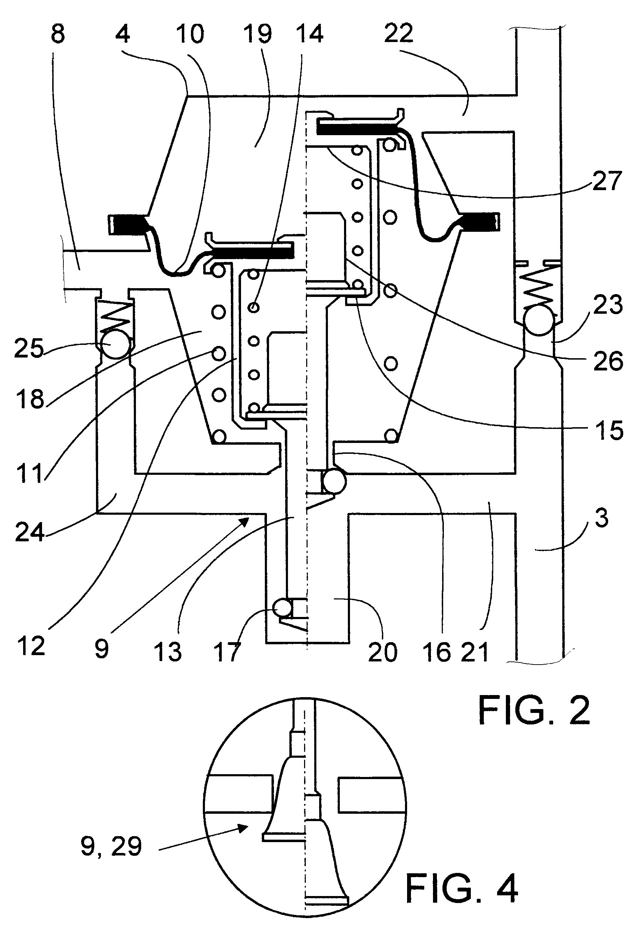

Hierfür weist der Druckregler 4 nach Fig. 2 eine das Speichervolumen begrenzende Membrane 10 auf, die entgegen einer Feder 11 das Speichervolumen vergrößert, wobei die dabei erfolgende Verstellung auf einen mit der Membrane 10 verbundenen Zapfen 12 übertragen wird. Dieser Zapfen 12 nimmt einen Ventilstößel 13 auf, der unter der Kraft einer Feder 14 gegen einen Zapfenbund 15 angelegt ist. Der Ventilstößel 13 ragt durch eine Ventilöffnung 16 hindurch und weist am durchragenden Ende einen Ventilschließkörper 17, hier mit einem O-Ring, auf.
Eine zwischen Ventilöffnung 16 und Membrane 10 bestehende Membrankammer 18 ist über die Rückführleitung 8 mit dem Tank 2 verbunden, so daß in dieser Membrankammer 18 im wesentlichen Umgebungsdruck herrscht.

Eine das Speichervolumen begrenzende Speichermembrankammer 19 ist ebenso wie eine den Ventilschließkörper 17 aufnehmende Ventilkammer 20 mit der Brennstoffdruckleitung 3 verbunden, wobei die Brennstoffdruckleitung 3 zwischen einem Abzweig 21 zur Ventilkammer 20 und einem Abzweig 22 zur Speichermembrankammer 19 ein Rückschlagventil 23 aufweist.

Ein zur Ventilöffnung 16 angeordneter Byasskanal 24, über dessen Funktion später berichtet wird, weist ein Druckventil 25 auf.
Bei Inbetriebnahme bei entleerter Speichermembrankammer 19 und geschlossenem Druckregelventil 9 fördert die Brennstoffpumpe 1 über das Rückschlagventil 23 in die Speichermembrankammer 19 und zum Reduzierdruckregler 5. Ab Verstellung der Membrane 10 gegen die Kraft der Feder 19 herrscht in der Brennstoffdruckleitung 3 ein höherer Druck als der vom Reduzierregler 5 geregelte, damit steht an der Verteilerleiste 7 unter Arbeitsdruck stehender Brennstoff an.

Über den Abzweig 21 zur Ventilkammer 20 gelangt der unter Druck stehende Brennstoff auch zum geschlossenen Druckregelventil 9 und belastet den Ventilschließkörper 17 gegenüber der unter Umgebungsdruck stehenden Membrankammer 18 und hält den Ventilstößel 13 solange in Schließstellung, bis die sich bei der Membranzapfenverstellung verspannende Feder 14 eine größere Kraft als die Schließkraft aufweist oder ein Zapfen 26 des Ventilstößels 13 mit dem Membranboden 27 zusammentrifft, so daß das Druckregelventil 19 durch die Membrankraft geöffnet wird und schlagartig so weit öffnet, bis der Ventilstößel 13 gegen den Zapfenbund 15 anliegt.

In diesem Fall wird die Brennstoffdruckleitung 3 stromauf des Rückschlagventils 23 mit dem in der Membrankammer 18 herrschenden Umgebungsdruck beaufschlagt, das Rückschlagventil 23 schließt und die Brennstoffpumpe 1 fördert nur noch gegen den Umgebungsdruck bei verringerter Leistungsaufnahme.

Stromab des Rückschlagventils 23 wird der Druck durch das Brennstoffspeichervolumen in der Speichermembrankammer 19 aufrechterhalten, solange, bis der Ventilstößel 13, von dem Membranzapfen 12 mitbewegt, das Druckregelventil 9 verschließt und der Vorgang sich wiederholt.
Durch das im Bypasskanal 24 angeordnete Druckventil 25 kann die an dem Ventilschließkörper 17 wirkende Schließkraft begrenzt sein.

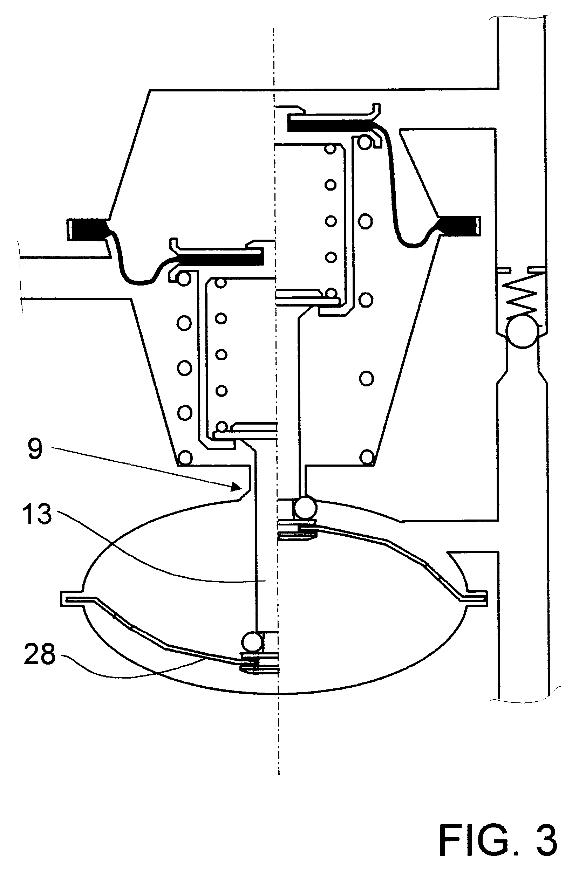

Fig. 3 zeigt eine alternative Ausbildung des Druckregelventils 9, bei der bei gleichem Aufbau wie in Fig. 2 dargestellt, der Ventilstößel 13 mit einer Schnappfeder 28 verbunden ist, die die Schließkraft des Ventilschließkörpers 17 am Druckregelventil 9 erhöht.

Fig. 4 zeigt eine weitere alternative Ausbildung, bei der das Druckregelventil 9 als Proportionalventil 29 ausgeführt ist, d. h. mit größerem Brennstoffspeichervolumen wird die über das Druckregelventil 9 zurückfließende Brennstoffmenge größer.

Der Reduzierregler kann, wie in Fig. 1 gestrichelt dargestellt ist, mit dem Luftansaugdruck der Brennkraftmaschine beaufschlagt sein über eine Leitung 30.

Es versteht sich von selbst, daß die Membrane der vorliegenden Ausführung auch durch einen Kolben ersetzt werden kann.

## Patentansprüche

1. Brennstoffversorgungssystem für Brennkraftmaschinen, gebildet aus Brennstoffpumpe, Druckregler und Verteilerleiste/Anschlüssen für Einspritzventile, wobei vom Druckregler eine von der Brennkraftmaschine nicht benötigte Brennstoffüberschußmenge in den Tank rückgeführt wird,
**dadurch gekennzeichnet**,
daß stromab des Druckreglers (4) zusätzlich ein Reduzierdruckregler (5) eingesetzt ist, dessen Reduzierdruck niedriger als der vom Druckregler (4) geregelte Druck ist.

2. System nach Anspruch 1,
**dadurch gekennzeichnet**,
daß der Druckregler (4) mit einem großen Speichervolumen (19) ausgestattet ist.

3. System nach Anspruch 2,
**dadurch gekennzeichnet**,
daß der Druckregler (4) in bezug auf ein Druckregelventil (9) eine große Schalthysterese aufweist und bei großem gespeicherten Brennstoffvolumen das Druckregelventil (9) öffnet und bei keinem schließt.

4. System nach Anspruch 2 oder 3,
**dadurch gekennzeichnet**,
daß der Druckregler (4) eine/einen das Speichervolumen begrenzende(n) Membrane/Kolben (10) aufweist, die/der im Zusammenwirken mit einem Ventilstößel (13) des Druckregelventils (9) die Öffnung und Schließung des Druckregelventils (9) bewirkt.

5. System nach Anspruch 4,
**dadurch gekennzeichnet**,
daß der Ventilschließkörper (17) des Druckregelventils (9) in Schließstellung mit dem vom Druckregler (4) eingestellten Brennstoffdruck gegenüber Umgebungsdruck belastet ist.

6. System nach Anspruch 5,
**dadurch gekennzeichnet**,
daß der Ventilschließkörper (17) in Schließstellung zusätzlich von einer Schnappfeder (28) belastet ist.

7. System nach einem der vorstehenden Ansprüche,
**dadurch gekennzeichnet**,
daß das Druckregelventil (9) als Proportionalventil (29) ausgebildet ist.

8. System nach einem der vorstehenden Ansprüche,
**dadurch gekennzeichnet**,
daß der Reduzierdruckregler (5) mit dem Ansaugdruck der Brennkraftmaschine beaufschlagt ist.
